# EUROPÄISCHE PATENTSCHRIFT

(11) **EP 3 230 856 B1**
(45) Veröffentlichungstag und Bekanntmachung des Hinweises auf die Patenterteilung: **03.10.2018**
(21) Anmeldenummer: 15823318.9
(22) Anmeldetag: 10.12.2015
(51) Int. Cl.: G06F 8/654

(54) **VERFAHREN ZUM UPDATE VON FIRMWARE VON GERÄTEN**
METHOD FOR UPDATING FIRMWARE OF DEVICES
PROCÉDÉ DE MISE À JOUR DE MICROPROGRAMME D'APPAREILS

(30) Priorität: 12.12.2014 DE 102014118546
(43) Veröffentlichungstag der Anmeldung: 18.10.2017
(73) Patentinhaber: Schneider Electric Automation GmbH, 97828 Marktheidenfeld (DE)
(72) Erfinder: JAHN, Herwig, 63533 Mainhausen (DE); HARNISCHFEGER, Michael, 63776 Mömbris (DE)
(74) Vertreter: Stoffregen, Hans-Herbert
(86) Internationale Anmeldenummer: PCT/EP2015/079221
(87) Internationale Veröffentlichungsnummer: WO 2016/092003

(56) Entgegenhaltungen:
- US-B1- 7 293 169

## Beschreibung

Die Erfindung bezieht sich auf ein Verfahren zum Update von Firmware von Geräten nach dem Oberbegriff des Anspruchs 1.

Ein Verfahren der eingangs genannten Art ist in der US 7 293 169 B1 beschrieben. Bei dem bekannten Verfahren werden Update-Applikationen durch einen Management-Computer bereitgestellt und über ein Netzwerk und entsprechende Schnittstellen in eine Vielzahl von Netzwerk-Computer übertragen.

Die Updates können auf jedem Netzwerk-Computer trotz unterschiedlicher Hardwarearchitekturen und verschiedener Betriebssysteme ausgeführt werden, da in jedem der Netzwerk-Computer eine Agenten-Applikation installiert ist. Von einer in dem Management-Computer ausgeführten Management-Programmanwendung wird ein Befehl zum Aktualisieren der Firmware in den Netzwerk-Computern initiiert. Der Befehl wird von der in den Netzwerk-Computern installierten Agenten-Anwendung empfangen. Jede Agenten-Anwendung überwacht die Befehlsaktivität über einen Kommunikationsport. Nach Überprüfung, ob der Befehl gültig ist, empfängt jede Agenten-Anwendung die Update-Applikation und eine neue Firmenware-Datei von einem an das Netzwerk angeschlossenen Computer oder einen Datenspeicher und verwendet die Update-Applikation und die neue Firmware-Datei, um die Firmware des an dem Netzwerk angeschlossenen Computers zu aktualisieren.

Bei dem Verfahren nach dem Stand der Technik erfolgt die Übertragung zwischen dem Management-Computer und den Netzwerk-Computer über ein und dasselbe Netzwerk. Der Ladevorgang ist für jeden Netzwerk-Computer identisch, da diese dieselben gerätespezifischen Lade-Informationen aufweisen.

Ein weiteres Verfahren ist in der DE 10 2006 044 182 A1 beschrieben. Zur bedarfsgerechten Funktionalisierung von Steuer-/Regeleinrichtungen, insbesondere von Motorsteuergeräten, ist wenigstens ein Zugriffsmittel zum Zugriff auf einen ersten Datenspeicher sowie eine Steuer-/Regeleinrichtung mit einem zweiten Datenspeicher vorgesehen, wobei der erste Datenspeicher wenigstens ein Funktionsmodul aufweist, durch welches eine Funktion und/oder Funktionalität der Steuer-/Regeleinrichtung ausführbar ist. Im Zusammenwirken von Zugriffsmittel und erstem Datenspeicher ist selektiv wenigstens ein Funktionsmodul in den zweiten Datenspeicher übertragbar und/oder zur Ausführung speicherbar, wobei die Gesamtfunktionalität der Steuer-/Regeleinrichtung durch bedarfsgemäße Selektion eines oder mehrerer Funktionsmodule flexibel anpassbar ist. Zur bedarfsgerechten Funktionalisierung des Motorsteuergeräts werden anhand einer verfahrensvorbereitend durchgeführten bedarfsgemäßen Funktionsauswahl ein oder mehrere in einer Datenbank des ersten Datenspeichers abgelegte Funktionsmodule selektiv in das Motorsteuergerät geladen. Dazu ist notwendig, dass in einem ersten Schritt eine vorbereitende bedarfsgemäße Funktionsauswahl aus mehreren angebotenen Funktionen durch einen Anwender durchgeführt wird.

Sind in einem Netzwerk mehrere Geräte mit verschiedenen Geräteeigenschaften eingebunden, ist es für einen Anwender sehr schwierig, fast unmöglich zu wissen, welche der angeschlossenen Automatisierungsgeräte welches Firmware-Update benötigt.

Ergänzend ist zu berücksichtigen, dass Geräte verschiedener Hersteller unterschiedliche Lade-Tools und Lademethoden verwenden, so dass das bekannte System zum Firmware-Update verschiedener Geräte nicht geeignet ist.

Ein Verfahren zum Update von Firmware FW1 ... FWn von Geräten D1 ... Dn nach dem Stand der Technik ist rein schematisch in Fig. 1 dargestellt. Die Geräte D1 ... Dn sind beispielsweise als Steuergeräte, Sensoren, Lastschalter, Antriebe und/oder programmierbare Steuerungen ausgebildet, die jeweils eine Firmware FW1 ...FWn enthalten, die während der Betriebsdauer des Gerätes ggfs. aktualisiert werden muss.

Da die Geräte D1 ... Dn unterschiedlicher Art sind und unterschiedliche Eigenschaften aufweisen, ist jedem der Geräte D ein spezifisches Lade-Tool LT1 ... LTn zugeordnet, das von einem Anwender C jeweils an das Gerät D1 ... Dn angekoppelt werden muss, dessen Firmware aktualisiert werden soll. Ein Beispiel für ein Lade-Tool ist der "Multi-Loader VW3 A8 121" oder "Unity Loader" der Schneider Electric Automation GmbH.

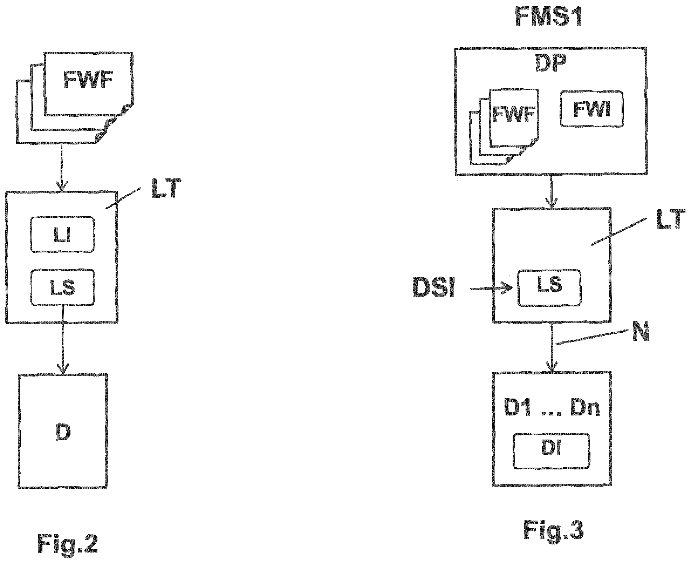

Bei dem bekannten Verfahren wird gemäß Fig. 2 eine Firmware-Datei FWF bereitgestellt und in das Lade-Tool LT geladen. In dem Lade-Tool LT sind Lade-Informationen LI abgelegt, die beispielsweise Informationen über Abhängigkeiten von Firmware-Dateien, eine Installationsumgebung, Verfahrensschritte zur Durchführung des Updates, Kommunikations-Informationen sowie Geräteeigenschafts-Informationen wie Geräteart, Firmware-Art sowie Kommunikationsfähigkeiten des Gerätes enthalten.

Das Lade-Tool LT wird mit dem Gerät D verbunden, wobei über eine spezifische Lade-Schnittstelle und Lade-Service LS eine Kommunikation mit dem Gerät D hergestellt wird, um die Firmware-Datei FWF in das Geräts D zu laden und ggfs. die Installation der Firmware-Datei zu überwachen.

Nachteilig bei dem bekannten Verfahren ist, dass für unterschiedliche Geräte D1 ... Dn jeweils ein eigenes Lade-Tool LT1 ... LTn verwendet werden muss, was für den Anwender C mit hohem Zeit- und Kostenaufwand verbunden ist.

Davon ausgehend liegt der vorliegenden Erfindung die Aufgabe zu Grunde, ein Verfahren der eingangs genannten Art derart weiterzubilden, dass das Firmware-Update unterschiedlicher Geräte ermöglicht und wesentlich vereinfacht wird.

Die Aufgabe wird erfindungsgemäß durch die Merkmale des Anspruchs 1 gelöst.

Die firmwarespezifischen Lade-Informationen und die gerätespezifischen Lade-Informationen werden vor dem Start des Ladevorgangs durch das Lade-Tool interpretiert, wobei durch Vergleich der Lade-Informationen ein Ladevorgang mit von dem Gerät und dem Datenpaket unterstützten, kompatiblen Lade-Informationen ausgewählt und eine Kommunikationsschnittstelle des Lade-Tools entsprechend der übereinstimmenden Lade-Informationen eingestellt wird.

Der Erfindung liegt die Idee zu Grunde, die Lade-Tools zu veranlassen, Kenntnis über Lade-Informationen und Geräte-Eigenschafts-Informationen im Zusammenhang mit dem Firmware-Update zu erlangen, um auf der Grundlage dieser Informationen das Firmware-Download-Verfahren und das Format der Daten flexibel an die jeweiligen Bedingungen anzupassen, ohne eine Adaption der Software des Lade-Tools vornehmen zu müssen bzw. dezidierte Lade-Tools für die jeweiligen Ziel-Automatisierungsgeräte verwenden zu müssen.

Durch das erfindungsgemäße Verfahren wird gegenüber dem Stand der Technik der Vorteil erreicht, dass der Firmware-Update beliebiger Geräte mit einem einzigen Lade-Tool ermöglicht wird, ohne dass Adaptionen der Software des Lade-Tools vorgenommen werden müssen. Nach dem Stand der Technik musste die Software der Lade-Tools für jeden neuen Geräte-Typ oder neue Version eines Produktes oder Produktfamilie angepasst werden, oder es musste ein neues Lade-Tool entwickelt und genutzt werden.

Folglich erlaubt das erfindungsgemäße Verfahren eine Aktualisierung von Firmware von unterschiedlichen Geräten mit sehr unterschiedlichen Geräteeigenschaften ohne Anpassung der Software der Lade-Tools.

Gemäß einer bevorzugten Verfahrensweise ist vorgesehen, dass die gerätespezifischen Lade-Informationen von dem zu aktualisierenden Gerät als erste externe Datenquelle über einen Kommunikations-Befehl in das Lade-Tool geladen werden und dass die firmwarespezifischen Lade-Informationen zusammen mit den Firmware-Dateien in einem Datenpaket als zweite externer Datenquelle gespeichert und in das Lade-Tool geladen werden.

Gemäß einer alternativen Verfahrensweise können die gerätespezifischen Lade-Informationen zusammen mit den firmwarespezifischen Lade-Informationen in dem Datenpaket bereitgestellt und in das Lade-Tool geladen werden.

Die firmwarespezifischen Lade-Informationen enthalten vorzugsweise Informationen wie Art und Identifikationsnummer der Zielgeräte, Firmware-Version, Art der Kommunikationsprotokolle, Art der Lademodi und/oder Installations-Informationen. In einem Paket können mehrere Lade-Optionen stehen. Das beinhaltet sowohl unterschiedliche Protokolle als auch verschiedene Lade-Modi. Somit ist es auch möglich, mehrere Geräte an eine Produktgruppe/Familie mit einem Paket zu adressieren, wenn alle auf derselben Firmware-Datei basieren, aber unterschiedliche Protokolle bzw. Lade-Modi unterstützen.

Die gerätespezifischen Lade-Informationen enthalten vorzugsweise Informationen wie Geräte-ID, aktuelle Firmware-Version, Statusinformationen, Speicherinformationen, verwendete Kommunikationsprotokolle, gerätespezifische Lade-Modi, Installations-Informationen und/oder Abhängigkeiten und Kompatibilitäts-Informationen bzw. Hinweise.

Bei einer weiteren bevorzugten Verfahrensweise kann das Datenpaket auch Skript-Files enthalten, die Informationen über eine Anpassung des Ladevorgangs an z. B. spezielle Eigenschaften oder Verhaltensweisen von Zielgeräten enthalten.

Gemäß einer weiteren bevorzugten Verfahrensweise ist vorgesehen, dass zur einheitlichen Kommunikation zwischen Lade-Tool und Gerät eine einheitliche Service-Kommunikationsschnittstelle mit generischen Services verwendet wird, die einen gemeinsamen Satz von Device-Services definieren, über die Daten und/oder Informationen in Form von Service-Operationen von und zu dem Automatisierungsgerät gesendet bzw. empfangen werden.

Diese Device-Services sind protokollunabhängig. Durch das Konzept der protokollunabhängigen Device-Services wird ein einheitlicher Ansatz für die Kommunikation zwischen Lade-Tools und Gerät realisiert.

Zur Steuerung verschiedener Aktivitäten können die Device-Services in Gruppen wie Verbindungs-Service, Informations-Service, Datenaustausch-Service, Notifikations-Service und/oder Diagnose-Service unterteilt werden. Ein Service ist so definiert, dass dieser eine oder mehrere Operationen enthält, wobei der Service ein abstraktes Ziel wie beispielsweise "Bereich Geräte-Informationen" und eine Operation einen konkreten Anwendungsfall wie "Lesegeräte-Informationen" beschreibt.

Zur Unterstützung unterschiedlicher Kommunikations-Protokolle ist vorgesehen, dass die Device-Services auf verschiedene Kommunikations-Protokolle abgebildet bzw. umgesetzt werden, um eine Vielzahl Geräte-Typen und Bussystemen abdecken zu können.

Die Flexibilität der Unterstützung für verschiedene Kommunikationsprotokolle wie MODBUS, FTP oder EtherNet/IP und Kommunikations- und/oder Transportmedien wie Feldbus, WLAN, USB oder Datenträger, ermöglicht die Adressierung der individuellen Geräteeigenschaften, wie beispielsweise Automatisierungsgeräte mit begrenzten Ressourcen und Rechenleistungen, wie Sensoren, bis hin zu intelligenten Automatisierungsgeräten wie Programmable Logic Controller (PLC).

Des Weiteren ist vorgesehen, dass die Device-Services für verschiedene Bereiche wie Firmware-Management, Anwendungs-Management oder Konfigurations-Management verwendet werden.

Das erfindungsgemäße Verfahren zeichnet sich gegenüber dem Stand der Technik weiterhin dadurch aus, dass Wissen und Information, welche von dem Lade-Tool zur Implementierung von Services zur Kommunikation mit den Automatisierungsgeräten benötigt werden, ausgelagert werden.

Die Information wird von dem mit dem Lade-Tool verbundenen Gerät in Form von gerätespezifischer Lade-Informationen bereitgestellt und wird als firmwarespezifische Lade-Informationen zusammen mit dem Datenpaket geliefert, welches mit dem Gerät ausgetauscht werden soll. Das Datenpaket liefert die firmwarespezifische Lade-Information, d. h. Informationen, was man mit den Daten machen kann. In dem Gerät werden die gerätespezifischen Lade-Informationen bereitgestellt, durch die dann eine Gruppe von Möglichkeiten gebildet wird, die für den tatsächlichen Ladevorgang zur Verfügung stehen.

Der Ansatz vermeidet die Notwendigkeit, die Software des Lade-Tools für neue Typen von Automatisierungsgeräten zu aktualisieren, da keine gerätespezifischen Software-Teile in das Lade-Tool implementiert werden müssen. Über die Device-Services werden verschiedene nicht-operative Datenaustausch-Anwendungen in Bezug auf Installation von z. B. Firmware-Dateien, Anwendungs-Dateien, Parameter-Dateien, Konfigurations-Dateien sowie Diagnose und andere Anwendungen mit nur einem Kommunikations-Schnittstelle angesprochen

Durch das erfindungsgemäße Verfahren wird ein einheitliches Verhalten der Geräte trotz unterschiedlicher Geräteeigenschaften und Kommunikations-Schnittstellen erreicht. Alle Geräte, in denen die Device-Services implementiert sind, verhalten sich gleichartig, unabhängig davon, welches Kommunikationsprotokoll oder welcher Transportmechanismus verwendet wird. Erforderliche geräteabhängige Spezialisierungen werden durch Geräte-Informationen auf Geräteebene oder Datenpaket-Metadaten auf Paketebene erreicht, die dem Lade-Tool zur Verfügung gestellt und anschließend von dem Lade-Tool bzw. der Lade-Software interpretiert werden. Durch diesen Ansatz wird ein weiter Bereich von Geräte-Typen und Geräte-Klassen in einheitlicher Weise abgedeckt. Die geräteabhängigen Spezialisierungen beinhalten auch standardisierte Daten, die allgemein verstanden oder einheitlich korrekt interpretiert werden können.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von den Figuren zu entnehmenden bevorzugten Ausführungsbeispielen.

Es zeigen:

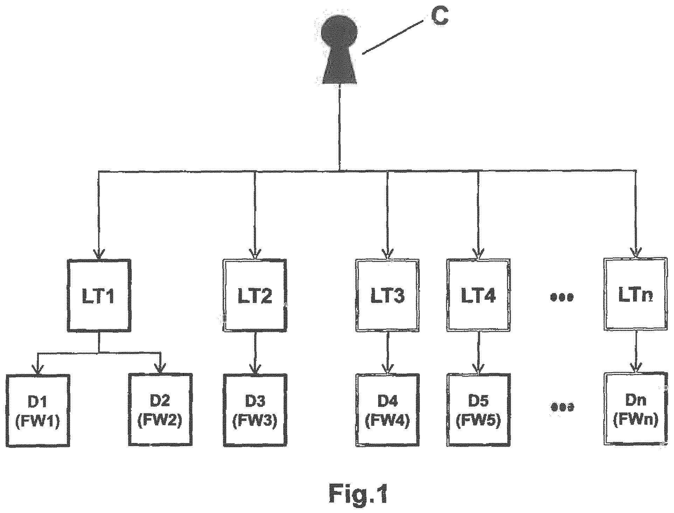

- Fig. 1: eine schematische Darstellung eines Verfahrens zum Updaten von Firmware von Geräten nach dem Stand der Technik,
- Fig. 2: eine schematische Darstellung eines Systems zum Updaten von Firmware eines Gerätes nach dem Stand der Technik,
- Fig. 3: eine schematische Darstellung einer ersten Ausführungsform eines Firmware-Management-Systems zum Updaten von Firmware eines Gerätes gemäß der Erfindung,
- Fig. 4: eine schematische Darstellung einer zweiten Ausführungsform eines Firmware-Management-Systems,
- Fig. 5: eine schematische Darstellung einer Anwendungs- und Service-Layer-Architektur des Lade-Tools,
- Fig. 6: eine schematische Darstellung von Service-Domains einer Device-Service-Infrastruktur des Lade-Tools,
- Fig.7a), b): schematische Darstellungen von Kommunikations-Diagrammen zwischen Lade-Tool und Automatisierungsgerät,
- Fig. 8: eine schematische Darstellung einer Service-Architektur-Schicht,
- Fig. 9: eine schematische Darstellung eines Verfahrens zum Laden von Anwendungs-, Konfigurations- und/oder Firmware-Dateien über unterschiedliche Lade-Tools nach dem Stand der Technik,
- Fig. 10: eine schematische Darstellung eines Verfahrens zum Laden von Datenpaketen über unterschiedliche Lade-Tools gemäß der Erfindung und
- Fig. 11: eine schematische Darstellung einer Datenstruktur von Datenpaketen umfassend Paket-Meta-Daten sowie Firmware-, Konfigurations- und/oder Anwendungs-Dateien.

Fig. 3 zeigt in schematischer Darstellung eine erste Ausführung eines Firmware-Management-Systems FMS1 zum Laden von Firmware-Dateien FWF über ein Lade-Tool LT in Geräte D1 ... Dn mit unterschiedlichen Geräteeigenschaften und/oder Geräteanforderungen. Die Geräte D1 ... Dn können als einfache Sensoren oder Aktoren, Programmable Logic Controller (PLC), Antriebe (Drives), Messgeräte wie Power Meter zum Messen von Strom und Spannung oder Schaltgeräte ausgebildet sein. Die verwendeten Firmware-Dateien FWF sind von der verwendeten Geräte-Plattform abhängig und sind nicht einheitlich.

Gemäß der Erfindung ist vorgesehen, dass das Lade-Tool LT derart ausgebildet ist, um die firmwarespezifische Lade-Information FWI und/oder Geräteeigenschaften bzw. Geräteanforderungen enthaltenen gerätespezifischen Lade-Informationen DI, die im Zusammenhang mit dem Laden der Firmware-Datei benötigt werden, aus externen Datenquellen zu laden. Basierend auf diesen Informationen bzw. dem durch die Informationen erhaltenen Wissen kann das Download-Verfahren und das verwendete Datenformat ohne Anpassung einer Software des Lade-Tools LT spezialisiert, d.h., an die jeweiligen Bedingungen des Ziel-Gerätes angepasst werden.

Gemäß dem in Fig. 3 dargestellten Ausführungsbeispiel können die Geräte-Eigenschafts-Informationen DI in dem Gerät D1 ... Dn bereitgestellt und über einen definierten Kommunikationsbefehl, welcher von jedem einzelnen individuellen Gerät D1 ... Dn unterstützt wird, durch das Lade-Tool LT aufgerufen und geladen werden.

Alternativ besteht die Möglichkeit, dass Firmware-Designer und/oder Geräteexperten sämtliche für den Ladevorgang notwendigen Lade-Informationen LI zusammen mit den Firmware-Dateien FWF in ein Datenpaket DP zum Zeitpunkt der Erstellung der Firmware FW aufnehmen, welches sodann in das Lade-Tool LT geladen wird. Vor dem eigentlichen Ladevorgang der Firmware wird sodann die Lade-Information LI von dem Lade-Tool LT interpretiert.

Zur Bereitstellung einer protokollunabhängigen Kommunikation über eine Datenverbindung N zwischen dem Lade-Tool LT und den jeweiligen Geräten D1 ... Dn ist in dem Lade-Tool LT eine Device-Service-Infrastruktur DSI mit generischen Device-Services DS implementiert, die ein gemeinsames Set von Service-Domains definieren, wie beispielsweise Lade-Service LS, Informations-Service IS, Verbindungs-Service CS, Notifikations-Service NS und/oder Discovery-Service DCS, die verwendet werden, um Daten und Informationen von und zu einem der Geräte D1 ... Dn zu senden bzw. zu empfangen.

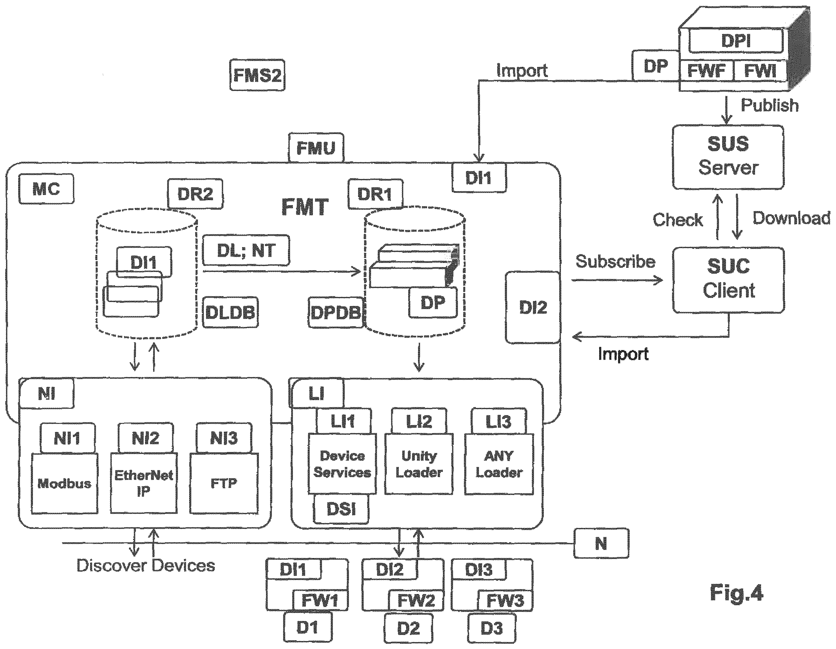

Fig. 4 zeigt rein schematisch eine eigenerfinderische zweite Ausführungsform eines Firmware-Management-Systems FMS2 zur Aktualisierung von Firmware FW von Geräten D1, D2, D3 wie Automatisierungsgeräten, insbesondere Aktoren, Sensoren und/oder Steuerungsgeräte sowie Energie-Management-Geräte, insbesondere Schaltgeräte. Das Firmware-Management-System FMS2 umfasst ein Firmware-Management-Gerät FMU wie Personal Computer oder mobiles Handgerät, umfassend eine Datenverarbeitungseinheit wie Mikrocontroller MC, in der ein Firmware-Management-Tool FMT implementiert ist. Das Firmware-Management-Tool FMT hat Zugriff auf Datenspeicher DR1, DR2, die in dem Firmware-Management-Gerät FMU integriert oder als externe Datenspeicher ausgebildet sein können.

Des Weiteren umfasst das Firmware-Management-Gerät FMU ein Daten-Interface DI1, über welches Datenpakete DP in eine Datenbank DPDB des Datenspeichers DP1 importiert werden können. Die Datenpakete DP umfassen jeweils Firmware-Dateien FWF, firmwarespezifische Lade-Informationen FWI sowie Datenpaket-Informationen DPI.

Alternativ besteht die Möglichkeit, die Datenpakete DP auf einem Software-Update-Server SUS abzulegen und diese über einen Software-Update-Client SUC über ein zweites Daten-Interface DI2 des Firmware-Management-Tools FMT in die Datenbank DPDB zu laden. Dieser Vorgang kann sowohl eine manuelle als auch automatische (zyklische) Überprüfung oder Abfrage nach neuen oder noch nicht - gemäß der Geräteliste - vorhandenen Updates beinhalten.

Des Weiteren umfasst das Firmware-Management-Gerät FMU ein anpassbares Netzwerk-Interface NI, in das verschiedene Kommunikations-Protokoll NI1, NI2, NI3 wie beispielsweise Modbus, EtherNet-IP oder FTP als sogenannte "Plug-Ins" implementierbar sind. Das Netzwerk-Interface NI ist über einen Netzwerk N mit den Geräten D1, D2, D3 verbunden.

Ferner umfasst das Firmware-Management-Tool FMT ein Lade-Tool-Interface LTI zur Implementierung verschiedener Lade-Tools LT1, LT2, LT3, die verschiedene Kommunikations- und Transportmechanismen zum Download der Datenpakete in die Geräte D1, D2, D3 zur Verfügung stellen.

Gemäß eines erfinderischen Gedankens ist vorgesehen, dass über das Daten-Interface DI1 oder über das Daten-Interface DI2 importierter Datenpakete DP in der Datenbank DPDB des Datenspeichers DR1 gespeichert werden.

Ein weiteres erfinderisches Merkmal sieht vor, dass zumindest eines der Netzwerk-Interfaces NI1, NI2, NI3 ausgebildet ist, entsprechend der Ausprägung des Netzwerkes N, Geräte D1, D2, D3 des Netzwerks N zu erkennen und deren gerätespezifischen Lade-Information DI1, DI2, DI3 zu erfassen. Die erkannten Geräte D1, D2, D3 sowie deren gerätespezifischen Lade-Informationen DI1, DI2, DI3 werden als eine Geräteliste DL bzw. Netzwerktopologie NT in einer Datenbank DLDB des zweiten Datenspeichers DR2 gespeichert.

Durch das Firmware-Management-Tool FMT erfolgt eine Analyse der in den Datenbanken DLDB, DPDB enthaltenen Informationen wobei auf der Grundlage der Geräteinformationen DI1, DI2, DI3, welche Geräte-ID-Informationen, aktuelle Firmware-Versions-Informationen, Geräte-Typ-Informationen, Speicherinformationen und/oder Lade-Informationen enthalten, sowie der firmwarespezifischen Informationen FWI, welche die Information enthält, welches Lade-Tool verwendet werden soll, eine Auswahl getroffen wird, bei welchem Gerät D1, D2, D3 und mit welchen Ladeparametern und welches Lade"Plug-in" die Firmware FW1, FW2, FW3 aktualisiert werden soll.

Nach Auswahl eines gewünschten Datenpakets DP werden durch das Firmware-Management-Tool die entsprechenden Informationen DI aus der Datenbank DLDB selektiert, welche für den Ladevorgang der Firmware auf das Gerät geeignet sind. Die Auswahl erfolgt auf der Grundlage von Datenpaket-Informationen DPI sowie firmwarespezifischen Lade-Informationen FI, die zusammen mit den Firmware-Dateien FWF in dem Datenpaket DP gespeichert sind. Dabei enthalten die firmwarespezifischen Ladeinformationen beispielsweise Zielgerät-Informationen, Firmware-Informationen, Kommunikations-Informationen sowie Lade-Informationen und das Wissen, welches Lade "Plug-in" verwendet werden soll bzw. muss.

Das oder die ausgewählten Datenpakete DP werden dann durch das Firmware-Management-Tool FMT über das Lade-Interface LI und ein entsprechendes Lade-Tool LT1, LT2 oder LT3 in das Zielgerät D1, D2, D3 geladen.

Durch die Analyse der Geräteliste DL mit zugehörigen gerätespezifischen Lade-Informationen DI sowie der Analyse der Datenpakete DP bietet das Firmware-Management-Tool FMT die Möglichkeit, Firmware-Updates für ein Gerät automatisch abzufragen und zu laden. Dabei kann der automatische Empfang über eine Anfrage "Subscribe" an den Software-Update-Client SUC erfolgen, der auf einem Software-Update-Server SUS nach einem Datenpaket DP mit den entsprechenden Firmware-Updates sucht. "Subscribe" bedeutet hier, dann man sich für ein Gerät registriert und automatisch neue Updates bei der nächsten automatisierten (regelmäßigen, zyklischen) Abfrage erhält. Geeignete Datenpakete DP können sodann über den Software-Update-Client SUC in die Datenbank DPDB des Firmware-Management-Tools FMT geladen bzw. importiert wird.

Die einheitliche bzw. gemeinsame Datenbank DPDB ermöglicht, dass alle Daten innerhalb einer Datenbank basierend auf den intelligenten Datenpaketen DP verwaltet werden. Die Datenbank kann auch extern verfügbar sein und muss sich nicht auf demselben Engineering System befinden - z. B. Cloud für mobile Geräte oder auf einem Server im Intranet. Intelligentes Datenpaket DP bedeutet hierbei, dass die Pakete Datenpaket-Informationen DPI sowie firmwarespezifische Lade-Informationen FI enthalten, die ausgewertet werden können, so dass die Datenpakete DP für die entsprechenden Zielgeräte ausgewählt werden können.

Die Datenverwaltung umfasst die Speicherung der Datenpakete DP, DL, NT in einer gemeinsamen Umgebung, d. h. den Datenbanken DPDB, DLDB und die Bereitstellung eines gemeinsamen bzw. einheitlichen Satzes von Informationen in Form der Datenpaket-Informationen DPI und/oder firmwarespezifischen Lade-Informationen FWI für die verschiedenen Arten von Dateninhalten.

Eine Auswahl einer gemeinsamen bzw. einheitlichen Datenbank kann nachgebildet und offline benutzt werden. Folglich kann eine Datenwiederherstellung durch Einführung von Auswahlkriterien basierend auf Datenpaket-Informationen DPI, die in dem Datenpaket als Paket-Metadaten enthalten sind, vereinfacht werden.

Durch den modularen Aufbau des Firmware-Management-Tools FMT, insbesondere die Möglichkeit der Implementierung von Netzwerk-Interfaces NI1, NI2, NI3 als sogenannte "Plug-Ins" ist das Firmware-Management-Tool FMT in der Lage, verschiedene Arten von Kommunikationswegen, Kommunikationsansätzen, Kommunikationsprotokollen oder Kommunikationsmechanismen zu integrieren bzw. zu nutzen, um mit verschiedenartigen Geräten D1, D2, D3 bzw. verschiedenen Netzwerken N zu interagieren. Dadurch wird die Komplexität der Datenverarbeitung betreffend die Gerätekommunikation reduziert. Auch wird eine Kompatibilität zu älteren Geräten unterstützt, nämlich durch Verwendung des "Plug In"-Konzeptes, welches die Einbettung älterer Lade-Mechanismen oder Lade-Tools erlaubt.

Unabhängig davon kann mit dem Firmware-Management-Tool FMT eine Topologie von verschiedenen Netzwerken N erzeugt werden, wodurch z. B. die verfügbaren Geräte in einer Anlage wiedergespiegelt werden. Ferner ergibt sich die Möglichkeit, eine Momentaufnahme der aktuellen Netzwerkkonfiguration zu erzeugen und abzuspeichern. Dies ermöglicht die Wiederherstellung früherer Konfigurationen von verschiedenen Netzwerken oder das Arbeiten, ohne überhaupt mit dem Netzwerk verbunden zu sein, um z. B. eine Aktualisierung der Firmware verschiedener Geräte in einer Wartungsphase vorzubereiten.

Des Weiteren bietet das Firmware-Management-Tool FMT die Optionen eines Daten-Providers, z. B. in einem Intranet zu agieren, um die verarbeiteten und gespeicherten Daten weiteren Kunden oder Auftraggebern anzubieten.

Aus obigem ergibt sich, dass das Firmware-Management-Tool FMT eine eindeutige Erfahrung, Unterstützung und Betreuung eines vollständigen Lebenszyklus von Daten betreffend die Geräte-Domäne bereitstellt. Das Firmware-Management-Tool verbessert die Nutzbarkeit zur Akquirierung, Verwaltung und zum Download aller wichtigen Informationen durch ein einziges Firmware-Management-Tool FMT. Somit wird die Komplexität für verschiedene Bereiche des Informations- und Datenflusses reduziert.

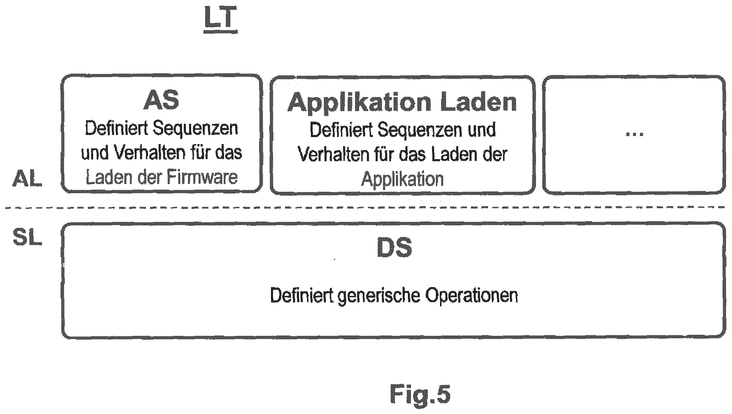

Fig. 5 zeigt rein schematisch eine Architektur des Lade-Tools LT, umfassend eine Anwendungsschicht AL mit Anwendungs-Software AS sowie eine Service-Schicht SL mit Device-Services DS. Die Anwendungs-Software AS definiert Sequenzen und Verhalten betreffend eines definierten Ablaufschemas wie:
- Cached loading (Firmware-Dateien bzw. Pakete werden zuerst auf Geräte abgelegt und anschließend von dort installiert),
- Direct Streamed loading (Die Firmware-Dateien werden in einzelnen Dateien nach und nach übertragen und installiert) und/oder
- Laden via SD-Card oder USB-Strick des Firmware-Updates (Firmware-Dateien/Paket werden auf ein tragbares Medium kopiert und anschließend in das Zielgerät eingesteckt und von dort aus per Kommunikationsbefehl oder Geräteneustart installiert).

Des Weiteren enthält die Anwendungs-Software AS Informationen betreffend die Anwendung von Device-Services DS, um die Firmware-Dateien in das entsprechende Gerät D1 ... Dn zu laden.

Der Service-Layer SL repräsentiert die Device-Service-Infrastruktur DSI mit den generischen Device-Services DS wie Lade-Service LS, Informations-Service IS, Verbindungs-Service CS, Notifikations-Service NS oder Discovery-Service DS, über die generische Operationen definiert werden.

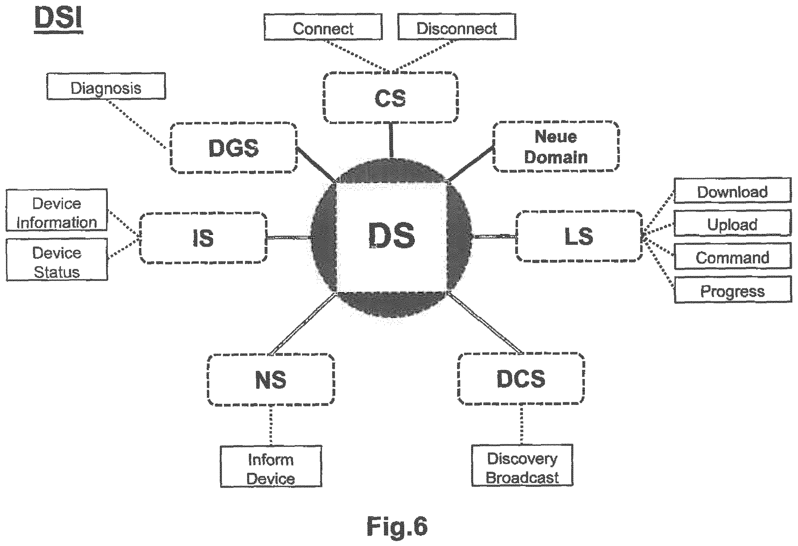

Fig. 6 zeigt rein schematisch verschiedene Service-Domains der Device-Service-Infrastruktur DSI. Dabei dient jede Service-Domain einem bestimmten Zweck. Dabei bestehen Abhängigkeiten zwischen den Service-Operationen und den Service-Bereichen. Beispielsweise kann ohne den Service "Connect" keine Service "Get Device Information" ausgeführt werden. Für ein Firmware-Loading müssen folglich mehrere Service-Operationen miteinander kombiniert werden. Die einzelnen Service-Operationen werden nachfolgend erläutert.

Über den Verbindungs-Service CS wird beispielsweise eine Verbindung zwischen dem Lade-Tool LT und dem Gerät geöffnet oder geschlossen und die Berechtigung abgefragt.

Über den Informations-Service IS wird eine protokollunabhängige Kommunikation mit dem Gerät D1 ...Dn ermöglicht; über Kommunikationsbefehle wie "Get Device Information" oder "Get Device Status" werden verschiedene Arten von statischen oder dynamischen Geräteinformationen in dem Gerät abgefragt.

Über den Lade-Service LS werden Operationen wie "Download, "Upload", "Send Command" sowie "Get Progress Info" ausgeführt, um z.B. ein Datenpaket DP bzw. Datenfiles aus dem Lade-Tool LT in das Gerät D1 ... Dn zu laden. Auch besteht die Möglichkeit, Daten oder Dateien aus dem Gerät D1 ... Dn herunterzuladen, z. B., um ein Backup von dem Gerät D1 ... Dn zu erstellen. Über den Befehl "Send Command" werden Befehle an das Gerät D1 ... Dn gesendet und über den Befehl "Get Progress Info" können Fortschritts-Informationen während der Lade-Sequenz abgefragt werden.

Mittels des Notifikations-Services NS können über die Operation "Send Notification" Nachrichten an das Gerät D1 ... Dn gesendet werden. Der Notifikations-Ansatz verwendet ein im Vergleich zu den üblichen Ladeverfahren ein abweichendes Ladeverfahren, welches die Lade-Services, Informations-Services sowie Verbindungs-Services benutzt. Je nach eintreffender Nachricht kann das Gerät selbst entscheiden was die Folgeaktivität ist, z. B. das Herunterladen der Firmware-Datei von einem Server oder nach einer vom Benutzer gemachten Bestätigungseingabe.

Über den Discovery-Service DCS, der vollkommen unabhängig von den anderen Services ist, können Geräte einheitlich in einem Netzwerk aufgefunden werden.

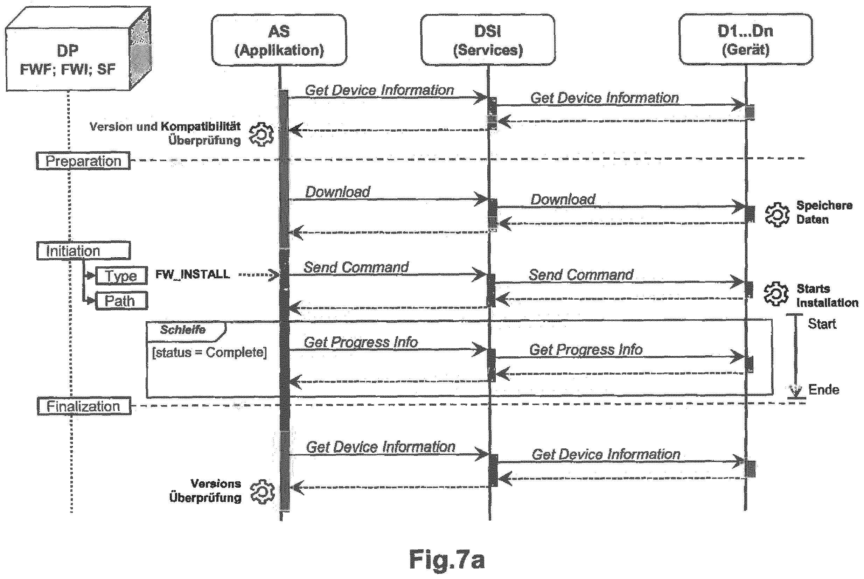

Fig. 7a) zeigt rein schematisch eine Kommunikation zwischen der Anwendungs-Software AS des Lade-Tools LT mit dem Gerät D1 ... Dn über die in dem Lade-Tool LT implementierte Device-Service-Infrastruktur DSI auf Basis des "Cached Loading". Nach dem obligatorischen Verbindungsaufbau über den Befehl "Connect" (nicht in Figur dargestellt) fragt die Anwendungs-Software AS über den Befehl "Get Device Information" des Informations-Services IS Geräte-Eigenschafts-Informationen des Geräts D1 ... Dn ab. Nach Empfang der Geräte-Eigenschafts-Informationen erfolgt ein Abgleich der Informationen, insbesondere das Auffinden gemeinsamer Lademöglichkeiten. Unabhängig davon wird eine Kompatibilitätsprüfung durchgeführt, um festzustellen, ob das Firmware-Update überhaupt für das Gerät bestimmt und installiert ist.

In einem weiteren Schritt wird das Datenpaket DP von dem Lade-Tool LT durch die Operation "Download" des Lade-Services LS in das Gerät geladen. Anschließend werden über die Operation "Send Command" Befehle an das Gerät gesendet um dieses in einen Status bzw. Modus zu versetzen, der den Datentransfer und die Firmware-Installation ermöglicht.

In der daran anschließenden Initiierungsphase wird der Installationsbefehl über die Anwendungs-Software AS des Lade-Tools LT der Operation "Send Command" an das Gerät D1 ... Dn gesendet, mit dem die Installation der Firmware in dem Gerät gestartet wird. Während der Installation kann ein Befehl "Get_Progress_Info" gesendet werden, um den Status des Firmware-Updates abzufragen.

Nach Abschluss der Installation sendet die Anwendungs-Software AS über den Informations-Service mit dem Befehl "Get Device Information", um zu überprüfen, ob der Update-Vorgang der Firmware erfolgreich verlaufen ist.

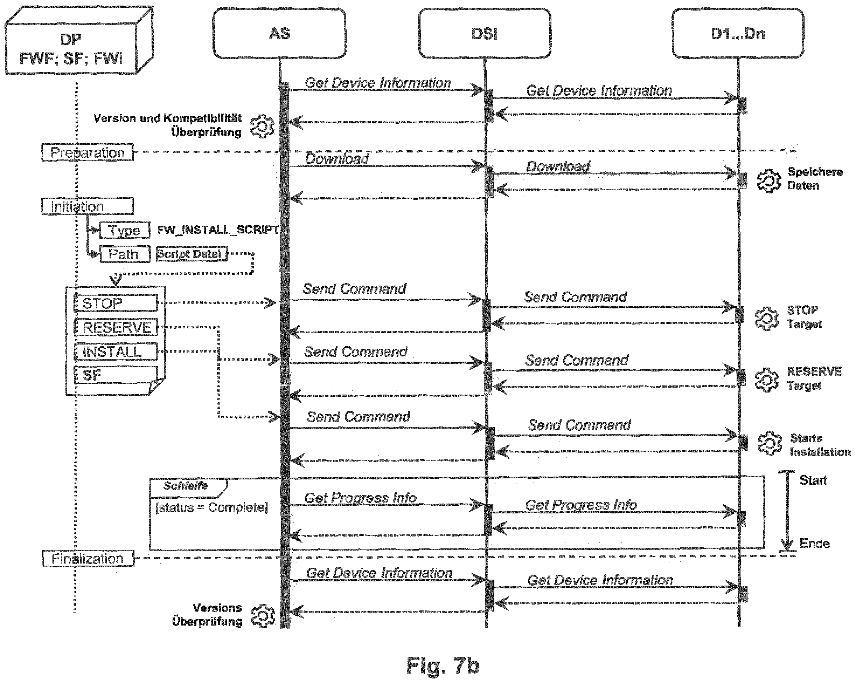

Fig. 7b) zeigt rein schematisch eine alternative Kommunikation zwischen der Anwendungs-Software AS des Lade-Tools LT und dem Gerät D1... Dn, bei welcher der Lade-Vorgang mit den verfügbaren Anpassungsmöglichkeiten an die individuellen Gegebenheiten des Gerätes angepasst wurde. Bei dieser Ausführungsform ist in dem Datenpaket DP ergänzend zu den Firmware-Dateien und den firmwarespezifischen Lade-Informationen eine Skriptdatei enthalten, über die der Ladevorgang der Firmware-Datei entsprechend den Besonderheiten des Gerätes gesteuert werden kann.

Die weiteren Verfahrensschritte entsprechen den gemäß Fig. 7a) beschriebenen Verfahrensschritten.

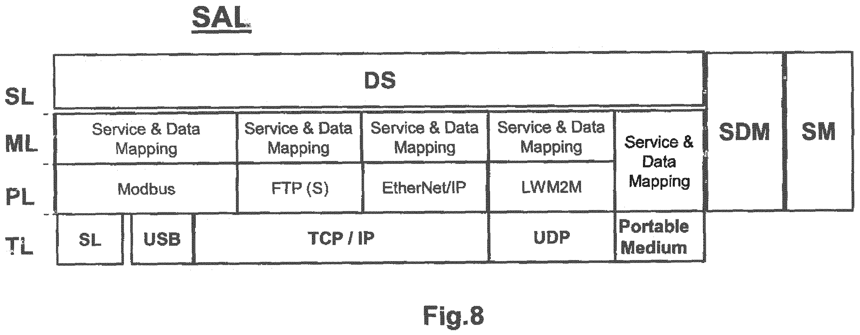

Fig. 8 zeigt rein schematisch eine Service-Architektur SAL zur Durchführung einer Protokoll-Umsetzung (Mapping). Mapping bedeutet, dass die generischen Device-Service- Operationen auf konkrete Protokolle abgebildet werden, um die Kommunikation über Operationen auf einem speziellen Protokoll zu ermöglichen. Dabei werden protokoll-spezifische Befehle als auch Datenformate verwendet, auf die sowohl die Service-Operationen als auch die operations-spezifische Daten umgewandelt werden. Der Zugriff durch ein Tool bzw. eine Software auf das umgesetzte Protokoll findet aber immer noch über die einheitliche und generische Service-Schnittstelle statt und nicht über die Protokoll-Umsetzung selbst.

Die Service-Architektur SAL umfasst die aus Fig. 5 bekannte Service-Layer SL sowie - dieser untergeordnet - eine Mapping-Layer ML, eine Protokoll-Layer PL sowie eine Transport-Layer TL. Übergreifend sind die einzelnen Layer der Service-Architektur SAL über ein Service-Datenmodell SDM sowie ein Sicherheits-Modell SM gekoppelt.

Die Device-Services DS der Service-Layer SL sind ihrerseits protokollunabhängig, um einen einheitlichen Kommunikations-Mechanismus zu ermöglichen.

Allerdings können die Device-Services DS auf verschiedene Protokolle wie MODBUS, FTP (S), EtherNet/IP sowie LWM2M unter Verwendung von Service-Data-Mapping-Informationen DMI der Mapping-Layer ML umgesetzt werden. Die einzelnen Kommunikationsprotokolle wie MODBUS, FTP (S) sowie EtherNet/IP stellen jeweils Transportmechanismen wie SL, USB und/oder TCP/IP der Transport-Layer TL zur Verfügung. Für das Protokoll LWM2M wird als Transportmechanismus UDP verwendet.

Alternativ besteht auch die Möglichkeit, als Transportmechanismus ein portables Medium wie USB-Stich oder SC-Card zu verwenden. Das erfindungsgemäße Verfahren ermöglicht auf einfache Weise die Erweiterung auf weitere Protokolle und Transportmechanismen.

Gemäß einem eigenständigen Erfindungsgedanken bezieht sich die Erfindung auf eine standardisierte Beschreibung von Daten wie Anwendungs-Dateien, Konfigurations-Dateien und/oder Firmware-Dateien in Form eines standardisierten Datenpakets ADP, CDP, FWDP.

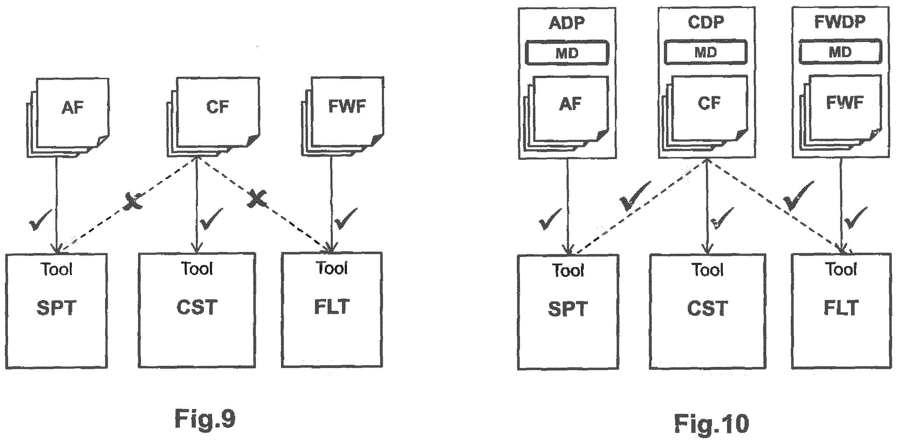

Fig. 9 zeigt die gegenwärtige Situation, bei der Anwendungs-Dateien AF, Konfigurations-Dateien CF sowie Firmware-Datei FWF nur über entsprechende Software-Tools SPT, CST, FLT verarbeitet werden können.

Gemäß der Erfindung werden Datenpakete ADP, CDP, FWDP definiert, welche die Daten in Form von Anwendungs-Dateien AF, Konfigurations-Dateien CF sowie Firmware-Dateien FWF enthalten, und denen zusätzlich Paket-Metadaten MD beigefügt sind, die den Inhalt sowie die Strukturierung des Inhalts der Daten-Pakete ADP, CDP, FWDP in allgemeiner Form beschreiben. Dadurch können unterschiedliche Arten von Inhalt in einer einheitlichen Form sowie die Datenpakete in unterschiedlichen Tools SPT, CST, FLT und/oder Systemen einheitlich verwendet werden. Mit anderen Worten: die Metadaten der Datenpakete ADP, CDP, FWDP enthalten Wissen über deren Inhalt.

Des Weiteren enthalten die Datenpakete ADP, CDP, FWDP Informationen über den Verwendungszweck und besondere Merkmal (Abhängigkeiten, Kompatibilitätsaspekte) ihres Inhalts. Diese Informationen sind mittels einer erweiterten bzw. spezialisierten Metadaten-Beschreibung in dem Datenpaket enthalten. Die Informationen sind abhängig vom Typ des Inhalts. Das bedeutet, dass für jeden Typ ein eigenes standardisiertes Metadaten-Beschreibungsschema bzw. -Syntax definiert ist. Dies schließt z. B. die Empfänger-Adresse sowie deren Zweck mit ein. Ergänzend können spezielle Rooting-Pfade z. B. für Sub-Module oder Sub-Netzwerke in der Datenpaket-Beschreibung mitgeteilt werden.

Die Datenpakete enthalten auch Informationen darüber, wie die Daten benutzt oder angewendet werden sollen, z. B., wie die Daten oder das Datenpaket mit Geräten ausgetauscht werden können oder wie eine Software-Library auf dem Zielgerät installiert werden kann. Ferner können in den Datenpaketen Befehlslisten enthalten sein, die das verarbeitende Tool SPT, CST, FLT oder das jeweilige Gerät befähigen, eine Sequenz von notwendigen Schritten auszuführen. Die Datenpakete ADP, CDP, FWDP beschreiben weiterhin, welche notwendigen Anforderungen zur Benutzung oder Anwendung des Inhalts der Datenpakete mit dem Zielgerät zu beachten sind. Des Weiteren enthält das Datenpaket Informationen über die Kompatibilität und Abhängigkeiten, die zu berücksichtigen sind, wenn der Inhalt benutzt wird.

Über einen gemeinsamen Paket-Rahmen wird die interne Datei-Organisation und die äußere Erscheinung definiert. Jedermann kann das Datenpaket identifizieren und weiß genau, wo bestimmte Dateien in dem Datenpaket platziert sind.

Die Datenpakete sind als Basis- und detaillierte Teile definiert. Dies ermöglicht die Erweiterbarkeit für neue Domains oder Anforderungen in einfacher Weise. Ein Datenpaket kann verschiedene Typen von Dateninhalten in üblicher Art und Weise beschreiben, wie z. B. Firmware-Updates, Software-Libraries, Konfigurations-Daten oder Geräte-Anwendungen.

Des Weiteren können mehrere Datenpakete in ein Container-Paket zusammengefasst werden um z. B. Dateninhalte für verschiedene Zielgeräte wie beispielsweise für sämtliche Automatisierungsgeräte eines Produktionssystems oder Bereichs bereitzustellen.

Durch die erfindungsgemäßen Datenpakete ist es möglich, unterschiedliche Dateninhalts-Typen in einer allgemeinen Art und Wise zu beschreiben, so dass alle am Kommunikationsablauf beteiligten Komponenten oder Instanzen genau wissen, wie die Daten zu interpretieren sind, um die erforderlichen oder benötigten Informationen zu erhalten.

Die Datenpakete sind in ihrer Art als intelligent zu bezeichnen, da sie sowohl ihren Inhalt beschreiben als auch Informationen enthalten, wie der Inhalt zu interpretieren und zu handhaben ist. Die Datenpakete liefern unterschiedliche Arten von Informationen, um imstande zu sein, den Dateninhalt auch ausführen zu können. In diesem Zusammenhang ist anzumerken, dass das Wissen über die Daten und deren Nutzung mit dem Datenpaket selbst und nicht durch das Verarbeitungs-Tool SPT, CST bzw. FLT bereitgestellt wird. Das Tool muss nur die benötigten generischen Services als auch deren allgemeine (Basis-) Ablauf- bzw. Aufruf-Sequenzen bereitstellen.

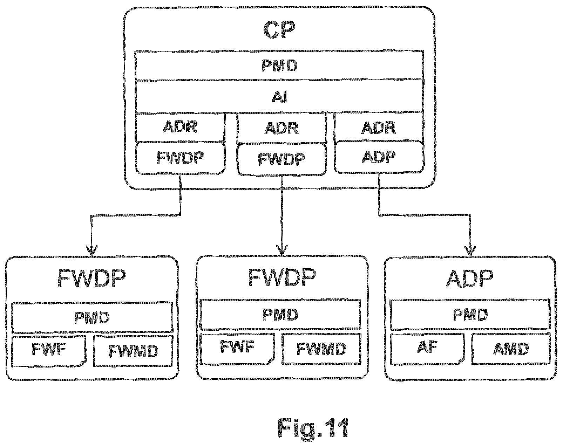

Fig. 11 zeigt in schematischer Darstellung die Struktur der Datenpakete ADP, CDP, FWDP sowie deren Einbindung in ein Container-Paket CP. Das Container-Paket enthält Paket-Metadaten PMD, die User-spezifische Informationen darüber enthalten, was ein Anwender mit den einzelnen Datenpaketen ADP, CDP, FWDP machen kann.

Über einen Assignment-Layer AL erfolgt via Adresse ADR eine Zuweisung zu den gewünschten Datenpaketen ADP, CDP, FWDP.

Die zuvor wiedergegebene Inhaltsbeschreibung des jeweiligen Datenpaketes ist in sogenannten Paket-Metadaten PMD enthalten, die innerhalb des Datenpakets auf spezifische bzw. detaillierte Metadaten wie Firmware-Metadaten FWMD oder Anwendungs-Metadaten AMD referenzieren, die eine detaillierte Inhaltsbeschreibung enthalten, wie die in den jeweiligen Datenpaketen ADP, CDP, FWDP enthaltenden Dateien, wie Firmware-Dateien FWF oder Anwendungs-Dateien AF, zu behandeln sind, insbesondere welche Lade-Mechanismen zu beachten sind bzw. bei Applikations-Daten, welche Abhängigkeiten zu berücksichtigen sind.

## Patentansprüche

1. Verfahren zum Update von Firmware von Automatisierungsgeräten oder Energie-Management-Geräten, umfassend die Verfahrensschritte
- Bereitstellen zumindest einer Firmware-Datei (FWF);
- Laden der zumindest einen Firmware -Datei in ein Lade-Tool (LT);
- Bereitstellen von Lade-Informationen für einen Ladevorgang zum Übertragen der Firmware-Datei in das Gerät (D), wobei die Lade-Informationen ausgegliedert aus dem Lade-Tool in zumindest einer externen Datenquelle gespeichert werden;
- Laden der Lade-Informationen in das Lade-Tool;
- Verbinden des Lade-Tools mit dem Gerät;
- Start des Ladevorgangs zum Übertragen der Firmware-Datei über eine Kommunikationsschnittstelle (LS) des Lade-Tools in das Gerät;
**dadurch gekennzeichnet,**
**dass** die Lade-Informationen (LI) in Form von firmwarespezifischen Lade-Informationen der zu übertragenden Firmware-Datei und gerätespezifischen Informationen des zu aktualisierenden Gerätes bereitgestellt und durch das Lade-Tool aus der zumindest einen externen Datenquelle geladen werden,
**dass** die firmwarespezifischen Lade-Informationen und die gerätespezifischen Lade-Informationen vor dem Start des Ladevorgangs durch das Lade-Tool interpretiert werden, wobei durch Vergleich der firmenwarespezifischen Lade-Informationen mit den gerätespezifischen Lade-Informationen ein Ladevorgang mit von dem Gerät und der Firmware-Datei unterstützten, kompatiblen Lade-Informationen ausgewählt und die Kommunikationsschnittstelle des Lade-Tools entsprechend den kompatiblen Lade-Informationen eingestellt wird.

2. Verfahren nach Anspruch 1,
**dadurch gekennzeichnet,**
**dass** die gerätespezifischen Lade-Informationen aus dem zu aktualisierenden Gerät als erste Datenquelle über einen Kommunikations-Befehl in das Lade-Tool geladen werden und dass die firmwarespezifischen Informationen zusammen mit den Firmware-Dateien in einem Datenpaket als zweite externer Datenquelle gespeichert und in das Lade-Tool geladen werden.

3. Verfahren nach Anspruch 1 oder 2,
**dadurch gekennzeichnet,**
**dass** die gerätespezifischen Lade-Informationen zusammen mit den firmwarespezifischen Lade- Informationen in dem Datenpaket bereitgestellt und in das Lade-Tool geladen werden.

4. Verfahren nach zumindest einem der vorhergehenden Ansprüche,
**dadurch gekennzeichnet,**
**dass** die firmwarespezifischen Lade-Informationen Informationen wie Art und Identifikationsnummer der Zielgeräte, Firmware-Versions-Informationen. Kommunikationsprotokoll-Informationen, Gerätemodi-Informationen und/oder Installations-Informationen enthalten.

5. Verfahren nach zumindest einem der vorhergehenden Anspräche,
**dadurch gekennzeichnet,**
**dass** die gerätespezifischen Lade-Informationen Informationen wie Geräte-ID-Informationen, aktuelle Firmware-Versions-Informationen, Statusinformationen, Speicherinformationen, Kommunikationsprotokoll-Informationen, Lademodi-Informationen und/oder Installations-Informationen enthalten.

6. Verfahren nach zumindest einem der vorhergehenden Ansprüche,
**dadurch gekennzeichnet,**
**dass** die Kommunikation zwischen dem einen Lade-Tool und dem einen oder mehreren unterschiedlichen Geräten über eine einheitliche Service-Kommunikationsschnittstelle mit generischen Services erfolgt, wobei die Services einen gemeinsamen Satz von Device-Services definieren, über die Daten und/oder Informationen in Form von Service-Operationen von und zu dem/den Geräten gesendet bzw. empfangen werden.

7. Verfahren nach zumindest einem der vorhergehenden Ansprüche,
**dadurch gekennzeichnet,**
**dass** protokollunabhängige Device-Services verwendet werden.

8. Verfahren nach zumindest einem der vorhergehenden Anspräche,
**dadurch gekennzeichnet,**
**dass** die Device-Services auf verschiedene Kommunikations-Protokolle und Transportmechanismen umgesetzt werden.

9. Verfahren nach zumindest einem der vorhergehenden Ansprüche,
**dadurch gekennzeichnet,**
**dass** als Kommunikations-Protokolle MODBUS, FTP(S), EtherNet/IP und/oder LWM2M und Varianten dieser verwendet werden.

10. Verfahren nach zumindest einem der vorhergehenden Ansprüche,
**dadurch gekennzeichnet,**
**dass** die Kommunikation des Lade-Tools mit dem Gerät und/oder externen Datenquellen über die Device-Services erfolgt, wobei die Device-Services ein Set von generischen Services wie Verbindungs-Service, Informations-Service, Datenaustausch-Service, Notifikations-Service und/oder Diagnose-Service bereitstellen.

11. Verfahren nach zumindest einem der vorhergehenden Ansprüche,
**dadurch gekennzeichnet,**
**dass** das Datenpaket einschließlich Firmware-Dateien und/oder Lade-Informationen über einen drahtgebundenen oder drahtlosen Kommunikationsmechanismus wie Feldbus oder WLAN oder über einen mobilen Datenträger wie USB -Stick oder SD-Card in das Gerät geladen werden.

12. Verfahren nach zumindest einem der vorhergehenden Ansprüche,
**dadurch gekennzeichnet,**
**dass** die Device-Services der Device-Service-Infrastruktur für verschiedene Aufgaben wie Firmware-Management, Anwendungs-Management und/oder Konfigurations-Management verwendet werden.

## Claims

1. A method for updating firmware of devices such as automation devices or energy management devices, comprising the method steps of
- providing at least one firmware file (FWF);
- loading the at least one firmware file into a loading tool (LT);
- providing of loading information for a loading process for transferring the firmware file into the device (D), wherein the loading information is saved hived-off the loading tool in at least one external data source;
- loading the loading information into the loading tool;
- connecting the loading tool to the device; and
- starting the loading process for transferring the firmware file via a communication interface of the loading tool to the device,
**characterized in**
**that** the loading information (LI) is provided as firmware-specific loading information of the firmware file to be transferred and as device-specific loading information of the device to be uploaded and loaded by the loading tool from the at least one external data source, and that
the firmware-specific loading information and the device-specific loading information is interpreted before the start of the loading process by the loading tool, wherein, by comparison of the firmware-specific loading information with the device-specific information a loading process is selected with compatible loading information supported by the device and the firmware file, and the communication interface of the loading tool corresponding to the matching loading information is established.

2. The method according to claim 1,
**characterized in that**
the device-specific loading information is loaded from the device to be updated, as first data source, via a communication command, into the loading tool, and that the firmware-specific information together with the firmware files is stored in a data packet, as second external data source, and loaded into the loading tool.

3. The method according to claim 1 or 2,
**characterized in that**
the device-specific loading information together with the firmware-specific loading information is provided in the data packet and loaded into the loading tool.

4. The method according to at least one of the preceding claims,
**characterized in that**
the firmware-specific loading information contains information such as type and identification number of the target devices, firmware version information, communication protocol information, device mode information and/or installation information.

5. The method according to at least one of the preceding claims,
**characterized in that**
the device-specific loading information contains information such as device ID information, current firmware version information, status information, storage information, communication protocol information, loading mode information and/or installation information.

6. The method according to at least one of the preceding claims,
**characterized in that**
the communication between the one loading tool and the one or more different devices occurs via a uniform service communication interface with generic services, wherein the services define a common set of device services, via which data and/or information in the form of service operations from and to the device(s) is sent and received, respectively.

7. The method according to at least one of the preceding claims,
**characterized in that**
protocol-independent device services are used.

8. The method according to at least one of the preceding claims,
**characterized in that**
the device services are converted using different communication protocols and transport mechanisms.

9. The method according to at least one of the preceding claims,
**characterized in that**,
as communication protocols, MODBUS, FTP(S), EtherNet/IP and/or LWM2M and variants thereof are used.

10. The method according to at least one of the preceding claims,
**characterized in that**
the communication of the loading tool with the device and/or external data sources occurs via the device services, wherein the device services provide a set of generic services such as connection service, information service, data exchange service, notification service and/or diagnosis service.

11. The method according to at least one of the preceding claims,
**characterized in that**
the data packet including firmware files and/or loading information is loaded into the device via a wired or wireless communication mechanism such as fieldbus or WLAN or via a mobile data carrier such as USB stick or SD card.

12. The method according to at least one of the preceding claims,
**characterized in that**
the device services of the device service infrastructure are used for different tasks such as firmware management, application management and/or configuration management.

## Revendications

1. Procédé de mise à jour de microprogramme d'automates ou de dispositifs de gestion de l'énergie, comprenant les étapes suivantes:
- fournir au moins un fichier de microprogramme (FWF) ;
- charger au moins un fichier de microprogramme dans un outil de chargement (LT) ;
- fournir des informations de chargement pour un processus de chargement permettant de transférer le fichier de microprogramme dans l'appareil (D), les informations de chargement étant mémorisées séparément de l'outil de chargement dans au moins une source de données externe ;
- charger des informations de chargement dans l'outil de chargement;
- connecter l'outil de chargement à l'appareil ;
- démarrer le processus de chargement pour le transfert du fichier de microprogramme dans l'appareil via une interface de communication (LS) de l'outil de chargement ; **caractérisé en ce**
**que** les informations de chargement (LI) sont fournies sous forme d'informations de chargement propres au fichier de microprogramme à transférer et d'informations spécifiques à l'appareil à actualiser et sont chargées par l'outil de chargement à partir d'au moins une source de données externe,
**que** les informations de chargement propres au microprogramme et les informations de chargement spécifiques à l'appareil doivent être interprétées avant le démarrage du processus de chargement par l'outil de chargement, sachant qu'en comparant les informations de chargement propres au microprogramme avec les informations de chargement spécifiques à l'appareil, un processus de chargement avec des informations de chargement compatibles prises en charge par l'appareil et le fichier de microprogramme est sélectionné et que l'interface de communication de l'outil de chargements est réglée en fonction des informations de chargement compatibles.

2. Procédé selon la revendication 1,
**caractérisé en ce**
**que**, suite à une commande de communication, les informations de chargement spécifiques à l'appareil sont chargées dans l'outil de chargement à partir de l'appareil à actualiser en tant que première source de données et que les informations propres au microprogramme sont stockées avec les fichiers de microprogramme dans un paquet de données en tant que seconde source de données externe, puis chargées dans l'outil de chargement.

3. Procédé selon la revendication 1 ou 2,
**caractérisé en ce**
**que** les informations de chargement spécifiques à l'appareil sont fournies dans le paquet de données avec les informations de chargement propres au microprogramme, puis sont chargées dans l'outil de chargement.

4. Procédé selon au moins l'une des revendications précédentes,
**caractérisé en ce**
**que** les informations de chargement propres au microprogramme contiennent des informations telles que le type et le numéro d'identification des appareils cibles, des informations sur la version du microprogramme, des informations sur le protocole de communication, des informations sur les modes d'appareil et/ou des informations d'installation.

5. Procédé selon au moins l'une des revendications précédentes,
**caractérisé en ce**
**que** les informations de chargement spécifiques à l'appareil contiennent des informations telles que des informations d'identification de l'appareil, des informations sur la version actuelle du microprogramme, des informations d'état, des informations de mémoire, des informations sur le protocole de communication, des informations sur les modes de chargement et/ou des informations d'installation.

6. Procédé selon au moins l'une des revendications précédentes,
**caractérisé en ce**
**que** la communication entre un outil de chargement et un ou plusieurs appareils différents se fait par une interface de communication de service unifiée avec des services génériques, les services définissant un ensemble commun de services d'appareils via lesquels les données et/ou les informations sont envoyées ou réceptionnées sous forme d'opérations de service depuis et vers l'appareil/les appareils.

7. Procédé selon au moins l'une des revendications précédentes,
**caractérisé en ce**
**que** des services d'appareils indépendants du protocole sont utilisés.

8. Procédé selon au moins l'une des revendications précédentes,
**caractérisé en ce**
**que** les services d'appareils sont mis en oeuvre sur différents protocoles de communication et mécanismes de transport.

9. Procédé selon au moins l'une des revendications précédentes,
**caractérisé en ce**
**que** MODBUS, FTP(S), EtherNet/IP et/ou LWM2M et leurs variantes sont utilisés comme protocoles de communication.

10. Procédé selon au moins l'une des revendications précédentes,
**caractérisé en ce**
**que** la communication de l'outil de chargement avec l'appareil et/ou des sources de données externes se fait via les services d'appareils, lesdits services fournissant un ensemble de services génériques tels que des services de connexion, d'informations, d'échange de données, de notification et/ou de diagnostic.

11. Procédé selon au moins l'une des revendications précédentes,
**caractérisé en ce**
**que** le paquet de données, fichiers de microprogramme et/ou informations de chargement inclus, est chargé dans l'appareil via un mécanisme de communication filaire ou sans fil tel un bus de terrain ou la Wifi ou via un support de données mobile tel qu'une clé USB ou une carte SD.

12. Procédé selon au moins l'une des revendications précédentes,
**caractérisé en ce**
**que** les services d'appareils de l'infrastructure des services d'appareils sont utilisés pour diverses tâches telles que la gestion du microprogramme, la gestion des applications et/ou la gestion de la configuration.
